# EUROPEAN PATENT APPLICATION

(11) **EP 4 664 229 A1**
(43) Date of publication of application: **17.12.2025**
(21) Application number: 25181908.2
(22) Date of filing: 10.06.2025
(51) Int. Cl.: G05D 1/648, A01B 69/04, G05D 105/15, G05D 107/20, G05D 109/10

(54) **AUTOMATIC GUIDANCE OF AGRICULTURAL VEHICLES**

(30) Priority: 12.06.2024 US 202418741550
(71) Applicant: CNH Industrial America LLC, New Holland, PA 17557 (US)
(72) Inventor: Tripathi, Abhinav, New Holland, 17557 (US); Singh, Aditya, New Holland, 17557 (US)
(74) Representative: CNH Industrial IP Department

(57) **Abstract**

An agricultural vehicle can include a first controller and a second controller. The first controller can receive first information that indicates a position of the agricultural vehicle relative to a swath, retrieve second information that indicates one or more parameters of the agricultural vehicle, generate a path for the agricultural vehicle to travel to reach the swath, and transmit one or more signals to indicate the path for the agricultural vehicle. The second controller can monitor movement of the agricultural vehicle as the agricultural vehicle travels to the swath, detect a deviation from the path, and generate one or more second signals to control subsequent movement of the agricultural vehicle.

## Description

### BACKGROUND

The present disclosure relates generally to the control of agricultural vehicles. More specifically, the present disclosure relates to automatic guidance of agricultural vehicles.

### SUMMARY

At least one embodiment relates to an agricultural vehicle. The agricultural vehicle can include one or more sensors. The one or more sensors can be disposed on the agricultural vehicle. The agricultural vehicle can include a first controller. The first controller can communicate with the one or more sensors. The first controller can include one or more memory devices. The one or more memory devices can store first instructions. The first instructions can, when executed by one or more first processors, cause the one or more first processors to receive, from the one or more sensors, first information that indicates a position of the agricultural vehicle relative to a swath. The first instructions can cause the one or more first processors to retrieve, from a database, second information that indicates one or more parameters of the agricultural vehicle. The first instructions can cause the one or more first processors to generate, based at least one the first information and the information, a path for the agricultural vehicle to travel to reach the swath. The first instructions can cause the one or more first processors to transmit, to a second controller of the agricultural vehicle, responsive to generation of the path, one or more signals to indicate the path for the agricultural vehicle. The second controller can include one or more second memory devices. The one or more second memory devices can store second instructions. The second instructions can, when executed by one or more second processors, cause the one or more second processors to monitor, responsive to receipt of the one or more signals, movement of the agricultural vehicle as the agricultural vehicle travels to the swath. The second instructions can cause the one or more second processors to detect, responsive to monitoring the movement of the agricultural vehicle, a deviation from the path. The second instructions can cause the one or more second processors to generate, responsive to detection of the deviation, one or more second signals to control subsequent movement of the agricultural vehicle.

At least one embodiment relates to a control system for an agricultural vehicle. The control system can include one or more memory devices. The one or more memory devices can store first instructions. The first instructions can, when executed by one or more first processors, cause the one or more first processors to receive, from the one or more sensors, first information that indicates a position of the agricultural vehicle relative to a swath. The first instructions can cause the one or more first processors to retrieve, from a database, second information that indicates one or more parameters of the agricultural vehicle. The first instructions can cause the one or more first processors to generate, based at least one the first information and the information, a path for the agricultural vehicle to travel to reach the swath. The first instructions can cause the one or more first processors to transmit, to a second controller of the agricultural vehicle, responsive to generation of the path, one or more signals to indicate the path for the agricultural vehicle. The first instructions can cause the one or more first processors to receive, responsive to transmission of the one or more signals, from the second controller, an input to a cascade control loop.

At least one embodiment relates to an agricultural vehicle. The agricultural vehicle can include a first controller. The first controller can communicate with one or more sensors. The first controller can include one or more memory devices. The one or more memory devices can store first instructions. The first instructions can, when executed by one or more first processors, cause the one or more first processors to receive, from the one or more sensors, first information that indicates a position of the agricultural vehicle relative to a swath. The first instructions can cause the one or more first processors to retrieve, from a database, second information that indicates one or more parameters of the agricultural vehicle. The first instructions can cause the one or more first processors to generate, based at least one the first information and the information, a path for the agricultural vehicle to travel to reach the swath. The first instructions can cause the one or more first processors to transmit, to a second controller of the agricultural vehicle, responsive to generation of the path, one or more signals to indicate the path for the agricultural vehicle. The second controller can include one or more second memory devices. The one or more second memory devices can store second instructions. The second instructions can, when executed by one or more second processors, cause the one or more second processors to monitor, responsive to receipt of the one or more signals, movement of the agricultural vehicle as the agricultural vehicle travels to the swath. The first controller can implement an outer loop of a cascade control loop by providing the one or more signals as inputs to the second controller. The second controller can implement an inner loop of the cascade control loop by providing one or more second signals as inputs to the first controller.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE DRAWINGS

FIG. 1 is a perspective view of a vehicle, according to an exemplary embodiment.
FIG. 2 is a schematic block diagram of the vehicle illustrated in FIG. 1, according to an exemplary embodiment.
FIG. 3 is a schematic block diagram of a driveline of the vehicle illustrated in FIG. 1, according to an exemplary embodiment.
FIG. 4 is a block diagram of a system that includes the vehicle illustrated in FIG. 1, according to an exemplary embodiment.
FIG. 5 is a block diagram of a cascade control loop, according to some embodiments.
FIG. 6 is an aerial view of an environment that includes a swath and the vehicle illustrated in FIG. 1, according to some embodiments.
FIG. 7 is an aerial view of the environment illustrated in FIG. 6, according to some embodiments.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

The present disclosure describes systems and methods for automatic guidance of agricultural vehicles based on constraints provided to a cascade control loop. For example, a supervisory controller may generate and/or predict a path for an agricultural vehicle to travel to reach a swath based on hardware specifications (e.g., constraints) of the agricultural vehicle. To continue this example, the supervisory controller may receive, as inputs, information such as a location of the agricultural vehicle relative to the swath and operational parameters of the agricultural vehicle (e.g., vehicle speed, turn radius, steering slew, steering constraints, etc.). In this example, a control system may control (e.g., operate, maneuver, move, etc.) the agricultural vehicle based on the path predicted by the supervisory controller.

Automatic guidance and/or control of an agricultural vehicle (e.g., combine, tractor, sprayer, etc.) may involve guiding the agricultural vehicle to a user defined crop-swath to perform one or more crop operations at the crop-swath. However, while traveling to the crop-swath, during the start of the crop operation, and/or during transition of the crop operation from the end of a row of the crop-swath, it is beneficial for the agricultural vehicle to reach the crop-swath in a minimum duration of time so as to optimize the crop operation. The optimization of the crop operation (e.g., minimize duration of time to the swath and transition between rows) may decrease operator discomfort (e.g., actions taken by an operator of the agricultural vehicle). The automatic guidance of the agricultural vehicle includes a wide range of initial conditions such as, agricultural vehicle speed, offset from swath, initial orientation of the agricultural vehicle with respect to the swath.

Other control systems for agricultural vehicles perform several rounds of tuning and testing of their controllers which are specific to each agricultural vehicle type (e.g., combine, tractor, sprayer, etc.). Stated otherwise the controllers are tested based on a specific vehicle overall several rounds. These specific vehicle tests are a manual process that includes a wide range of initial conditions which causes the manual process to be tedious and time consuming. These specific processes are also unable to account vehicle specific hardware (e.g., steering devices, tractive element size, etc.) which impacts optimization of the testing process. As such, the other control systems perform subsequent testing and/or tuning of a controller based on specific hardware for the vehicle. Stated otherwise, the controller is subsequent tested and/or tuned for specific hardware and/or hardware combinations for the vehicle.

Some of the technical solutions described herein include a control system that implements a two level cascade control loop having a supervisory controller that acts as an outer layer and a tracking controller that acts as an inner layer. The supervisory controller may generate, based on a set of initial conditions that account for vehicle specific parameters, a path for an agricultural vehicle to reach a swath. For example, the supervisory controller may generate a path for an agricultural vehicle based on a steering capability of the agricultural vehicle. The supervisory controller may implement a nonlinear model predictive control scheme that accounts for hardware specific parameters of the agricultural vehicle such as, maximum allowable steering limits and/or steering slew. The supervisory controller accounting for hardware specific parameters results in seamless generation and acquisition of a path for which the agricultural vehicle may travel to reach the swath.

The tracking controller may monitor movement of the agricultural vehicle to track any deviations by the agricultural vehicle from the path. The tracking controller may provide the deviations, as inputs, to the supervisory controller so that the supervisory controller may perform subsequent adjusts to the path which account for the deviations. The cascade control loop may reduce and/or minimize computation effort of the supervisory controller and/or the tracking controller by implementing a shrinking prediction horizon with respect to the swath. For example, a heuristic method may be implemented that allows for a shrinking prediction horizon and a dynamic step size to minimize the computational effort. Furthermore, the cascade control loop may include an initial prediction that is subsequent revised. The cascade control loop may also reduce computational effort and/or demand by having the supervisory controller and the tracking controller perform actions at different rates (e.g., the supervisory controller is active when the tracking controller is idle and/or vice versa). The cascade control loop may further adjust tolerance levels, which respect to swath acquisition (e.g., path taken by an agricultural vehicle), to provide greater agricultural vehicle variance while a distance to the swath is large (e.g., high tolerance) and less vehicle variance as the distance to the swath decreases (e.g., less tolerance). Stated otherwise, while the distance between the agricultural vehicle and the swath is large the acquisition path may be sub-optimal and as the distance between the agricultural vehicle decreases the acquisition path may be optimized.

Advantageously the cascade control loop describe herein may reduce and/or eliminate a testing and/or tuning process prior to implement of a control system for an agricultural vehicle. Additionally, the cascade control loop may provide vehicle specific acquisition path optimization given that the cascade control loop can account for vehicle specific hardware parameters without any tunning and/or testing prior to implementation.

### Overall Vehicle

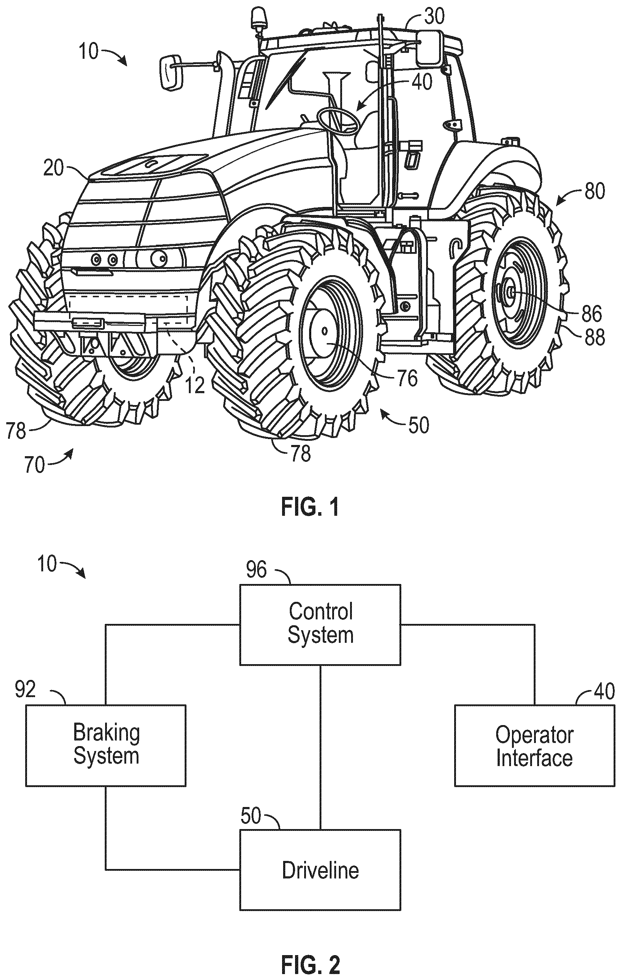

According to the exemplary embodiment shown in FIGS. 1-3, a machine or vehicle, shown as vehicle 10, includes a chassis, shown as frame 12; a body assembly, shown as body 20, coupled to the frame 12 and having an occupant portion or section, shown as cab 30; operator input and output devices, shown as operator interface 40, that are disposed within the cab 30; a drivetrain, shown as driveline 50, coupled to the frame 12 and at least partially disposed under the body 20; a vehicle braking system, shown as braking system 92, coupled to one or more components of the driveline 50 to facilitate selectively braking the one or more components of the driveline 50; and a vehicle control system, shown as control system 96, coupled to the operator interface 40, the driveline 50, and the braking system 92. In other embodiments, the vehicle 10 includes more or fewer components.

The chassis of the vehicle 10 may include a structural frame (e.g., the frame 12) formed from one or more frame members coupled to one another (e.g., as a weldment). Additionally or alternatively, the chassis may include a portion of the driveline 50. By way of example, a component of the driveline 50 (e.g., the transmission 52) may include a housing of sufficient thickness to provide the component with strength to support other components of the vehicle 10.

According to an exemplary embodiment, the vehicle 10 is an off-road machine or vehicle. In some embodiments, the off-road machine or vehicle is an agricultural machine or vehicle such as a tractor, a telehandler, a front loader, a combine harvester, a grape harvester, a forage harvester, a sprayer vehicle, a speedrower, and/or another type of agricultural machine or vehicle. In some embodiments, the off-road machine or vehicle is a construction machine or vehicle such as a skid steer loader, an excavator, a backhoe loader, a wheel loader, a bulldozer, a telehandler, a motor grader, and/or another type of construction machine or vehicle. In some embodiments, the vehicle 10 includes one or more attached implements and/or trailed implements such as a front mounted mower, a rear mounted mower, a trailed mower, a tedder, a rake, a baler, a plough, a cultivator, a rotavator, a tiller, a harvester, and/or another type of attached implement or trailed implement.

According to an exemplary embodiment, the cab 30 is configured to provide seating for an operator (e.g., a driver, etc.) of the vehicle 10. In some embodiments, the cab 30 is configured to provide seating for one or more passengers of the vehicle 10. According to an exemplary embodiment, the operator interface 40 is configured to provide an operator with the ability to control one or more functions of and/or provide commands to the vehicle 10 and the components thereof (e.g., turn on, turn off, drive, turn, brake, engage various operating modes, raise/lower an implement, etc.). The operator interface 40 may include one or more displays and one or more input devices. The one or more displays may be or include a touchscreen, an LCD display, a LED display, a speedometer, gauges, warning lights, etc. The one or more input device may be or include a steering wheel, a joystick, buttons, switches, knobs, levers, an accelerator pedal, a brake pedal, etc. In some embodiments, the operator interface 40 may include at least one of a screen, a monitor, a visual display device, a touchscreen display, a television, a video display, a light emitting diode (LED) display, a mobile device, a kiosk, a digital terminal, a mobile computing device, a desktop computer, a smartphone, a tablet, a smart watch, a smart sensor, and/or any other device that can facilitate providing, receiving, displaying and/or otherwise interacting with content (e.g., webpages, mobile applications, etc.). For example, the operator interface may include displays that include a resistive touchscreen that can receive user input via interactions (e.g., touches) with the touchscreen.

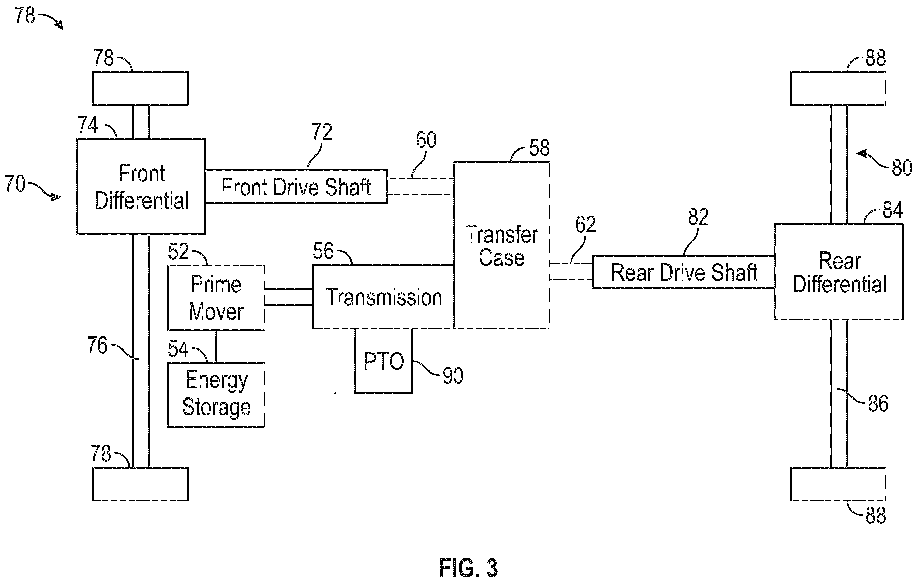

According to an exemplary embodiment, the driveline 50 is configured to propel the vehicle 10. As shown in FIG. 3, the driveline 50 includes a primary driver, shown as prime mover 52, and an energy storage device, shown as energy storage 54. In some embodiments, the driveline 50 is a conventional driveline whereby the prime mover 52 is an internal combustion engine and the energy storage 54 is a fuel tank. The internal combustion engine may be a spark-ignition internal combustion engine or a compressionignition internal combustion engine that may use any suitable fuel type (e.g., diesel, ethanol, gasoline, natural gas, propane, etc.). In some embodiments, the driveline 50 is an electric driveline whereby the prime mover 52 is an electric motor and the energy storage 54 is a battery system. In some embodiments, the driveline 50 is a fuel cell electric driveline whereby the prime mover 52 is an electric motor and the energy storage 54 is a fuel cell (e.g., that stores hydrogen, that produces electricity from the hydrogen, etc.). In some embodiments, the driveline 50 is a hybrid driveline whereby (i) the prime mover 52 includes an internal combustion engine and an electric motor/generator and (ii) the energy storage 54 includes a fuel tank and/or a battery system.

As shown in FIG. 3, the driveline 50 includes a transmission device (e.g., a gearbox, a continuous variable transmission ("CVT"), etc.), shown as transmission 56, coupled to the prime mover 52; a power divider, shown as transfer case 58, coupled to the transmission 56; a first tractive assembly, shown as front tractive assembly 70, coupled to a first output of the transfer case 58, shown as front output 60; and a second tractive assembly, shown as rear tractive assembly 80, coupled to a second output of the transfer case 58, shown as rear output 62. According to an exemplary embodiment, the transmission 56 has a variety of configurations (e.g., gear ratios, etc.) and provides different output speeds relative to a mechanical input received thereby from the prime mover 52. In some embodiments (e.g., in electric driveline configurations, in hybrid driveline configurations, etc.), the driveline 50 does not include the transmission 56. In such embodiments, the prime mover 52 may be directly coupled to the transfer case 58. According to an exemplary embodiment, the transfer case 58 is configured to facilitate driving both the front tractive assembly 70 and the rear tractive assembly 80 with the prime mover 52 to facilitate front and rear drive (e.g., an all-wheel-drive vehicle, a four-wheel-drive vehicle, etc.). In some embodiments, the transfer case 58 facilitates selectively engaging rear drive only, front drive only, and both front and rear drive simultaneously. In some embodiments, the transmission 56 and/or the transfer case 58 facilitate selectively disengaging the front tractive assembly 70 and the rear tractive assembly 80 from the prime mover 52 (e.g., to permit free movement of the front tractive assembly 70 and the rear tractive assembly 80 in a neutral mode of operation). In some embodiments, the driveline 50 does not include the transfer case 58. In such embodiments, the prime mover 52 or the transmission 56 may directly drive the front tractive assembly 70 (i.e., a front-wheel-drive vehicle) or the rear tractive assembly 80 (i.e., a rear-wheel-drive vehicle).

As shown in FIGS. 1 and 3, the front tractive assembly 70 includes a first drive shaft, shown as front drive shaft 72, coupled to the front output 60 of the transfer case 58; a first differential, shown as front differential 74, coupled to the front drive shaft 72; a first axle, shown front axle 76, coupled to the front differential 74; and a first pair of tractive elements, shown as front tractive elements 78, coupled to the front axle 76. In some embodiments, the front tractive assembly 70 includes a plurality of front axles 76. In some embodiments, the front tractive assembly 70 does not include the front drive shaft 72 or the front differential 74 (e.g., a rear-wheel-drive vehicle). In some embodiments, the front drive shaft 72 is directly coupled to the transmission 56 (e.g., in a front-wheel-drive vehicle, in embodiments where the driveline 50 does not include the transfer case 58, etc.) or the prime mover 52 (e.g., in a front-wheel-drive vehicle, in embodiments where the driveline 50 does not include the transfer case 58 or the transmission 56, etc.). The front axle 76 may include one or more components.

As shown in FIGS. 1 and 3, the rear tractive assembly 80 includes a second drive shaft, shown as rear drive shaft 82, coupled to the rear output 62 of the transfer case 58; a second differential, shown as rear differential 84, coupled to the rear drive shaft 82; a second axle, shown rear axle 86, coupled to the rear differential 84; and a second pair of tractive elements, shown as rear tractive elements 88, coupled to the rear axle 86. In some embodiments, the rear tractive assembly 80 includes a plurality of rear axles 86. In some embodiments, the rear tractive assembly 80 does not include the rear drive shaft 82 or the rear differential 84 (e.g., a front-wheel-drive vehicle). In some embodiments, the rear drive shaft 82 is directly coupled to the transmission 56 (e.g., in a rear-wheel-drive vehicle, in embodiments where the driveline 50 does not include the transfer case 58, etc.) or the prime mover 52 (e.g., in a rear-wheel-drive vehicle, in embodiments where the driveline 50 does not include the transfer case 58 or the transmission 56, etc.). The rear axle 86 may include one or more components. According to the exemplary embodiment shown in FIG. 1, the front tractive elements 78 and the rear tractive elements 88 are structured as wheels. In other embodiments, the front tractive elements 78 and the rear tractive elements 88 are otherwise structured (e.g., tracks, etc.). In some embodiments, the front tractive elements 78 and the rear tractive elements 88 are both steerable. In other embodiments, only one of the front tractive elements 78 or the rear tractive elements 88 is steerable. In still other embodiments, both the front tractive elements 78 and the rear tractive elements 88 are fixed and not steerable.

In some embodiments, the driveline 50 includes a plurality of prime movers 52. By way of example, the driveline 50 may include a first prime mover 52 that drives the front tractive assembly 70 and a second prime mover 52 that drives the rear tractive assembly 80. By way of another example, the driveline 50 may include a first prime mover 52 that drives a first one of the front tractive elements 78, a second prime mover 52 that drives a second one of the front tractive elements 78, a third prime mover 52 that drives a first one of the rear tractive elements 88, and/or a fourth prime mover 52 that drives a second one of the rear tractive elements 88. By way of still another example, the driveline 50 may include a first prime mover that drives the front tractive assembly 70, a second prime mover 52 that drives a first one of the rear tractive elements 88, and a third prime mover 52 that drives a second one of the rear tractive elements 88. By way of yet another example, the driveline 50 may include a first prime mover that drives the rear tractive assembly 80, a second prime mover 52 that drives a first one of the front tractive elements 78, and a third prime mover 52 that drives a second one of the front tractive elements 78. In such embodiments, the driveline 50 may not include the transmission 56 or the transfer case 58.

As shown in FIG. 3, the driveline 50 includes a power-take-off ("PTO"), shown as PTO 90. While the PTO 90 is shown as being an output of the transmission 56, in other embodiments the PTO 90 may be an output of the prime mover 52, the transmission 56, and/or the transfer case 58. According to an exemplary embodiment, the PTO 90 is configured to facilitate driving an attached implement and/or a trailed implement of the vehicle 10. In some embodiments, the driveline 50 includes a PTO clutch positioned to selectively decouple the driveline 50 from the attached implement and/or the trailed implement of the vehicle 10 (e.g., so that the attached implement and/or the trailed implement is only operated when desired, etc.).

According to an exemplary embodiment, the braking system 92 includes one or more brakes (e.g., disc brakes, drum brakes, in-board brakes, axle brakes, etc.) positioned to facilitate selectively braking (i) one or more components of the driveline 50 and/or (ii) one or more components of a trailed implement. In some embodiments, the one or more brakes include (i) one or more front brakes positioned to facilitate braking one or more components of the front tractive assembly 70 and (ii) one or more rear brakes positioned to facilitate braking one or more components of the rear tractive assembly 80. In some embodiments, the one or more brakes include only the one or more front brakes. In some embodiments, the one or more brakes include only the one or more rear brakes. In some embodiments, the one or more front brakes include two front brakes, one positioned to facilitate braking each of the front tractive elements 78. In some embodiments, the one or more front brakes include at least one front brake positioned to facilitate braking the front axle 76. In some embodiments, the one or more rear brakes include two rear brakes, one positioned to facilitate braking each of the rear tractive elements 88. In some embodiments, the one or more rear brakes include at least one rear brake positioned to facilitate braking the rear axle 86. Accordingly, the braking system 92 may include one or more brakes to facilitate braking the front axle 76, the front tractive elements 78, the rear axle 86, and/or the rear tractive elements 88. In some embodiments, the one or more brakes additionally include one or more trailer brakes of a trailed implement attached to the vehicle 10. The trailer brakes are positioned to facilitate selectively braking one or more axles and/or one more tractive elements (e.g., wheels, etc.) of the trailed implement.

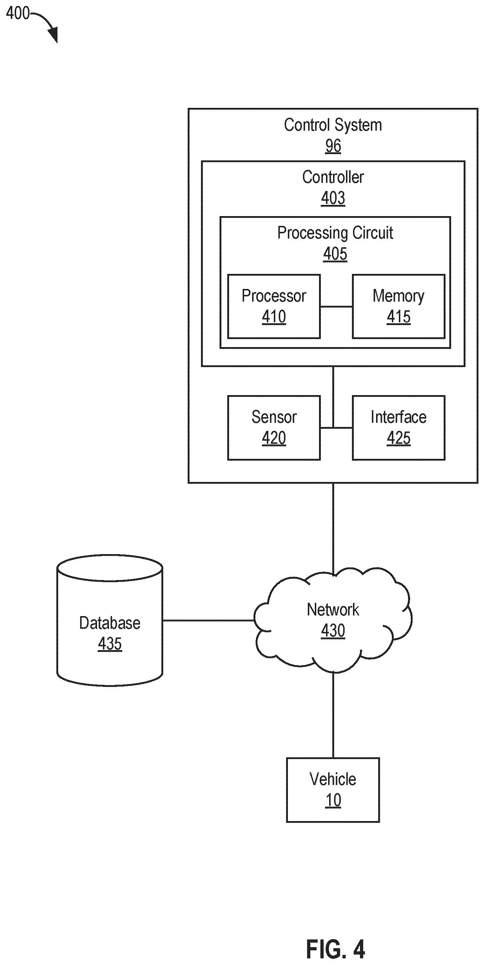

FIG. 4 depicts a block diagram of a system 400, according to an exemplary embodiment. In some embodiments, the system 400 and/or one or more components thereof may implement and/or include a closed-loop system. Each system and/or component of the system 400 can include one or more processors, memory, network interfaces, communication interfaces, and/or user interfaces. Memory can store programming logic that, when executed by the processors, controls the operation of the corresponding computing system or device. Memory can also store data in databases. The network interfaces can allow the systems and/or components of the system 400 to communicate wirelessly. The communication interfaces can include wired and/or wireless communication interfaces and the systems and/or components of the system 400 can be connected via the communication interfaces. The various components in the system 400 can be implemented via hardware (e.g., circuitry), software (e.g., executable code), or any combination thereof. Systems, devices, and components in FIG. 4 can be added, deleted, integrated, separated, and/or rearranged.

In some embodiments, the system 400 may include the control system 96, the vehicle 10, a network 430, and/or a database 435. In some embodiments, the system 400 and/or one or more systems, devices, and/or components thereof may implement at least one of the various techniques described herein. For example, the control system 96 may provide automatic guidance of the vehicle 10. As another example, the control system 96 may implement the cascade control loop described herein. While the control system 96, as shown in FIG. 4, is separate from the vehicle 10, the control system 96 may be integrated with and/or included with the vehicle 10.

In some embodiments, the network 430 may include at least one of a local area network (LAN), wide area network (WAN), telephone network (such as the Public Switched Telephone Network (PSTN)), Controller Area Network (CAN), wireless link, intranet, the Internet, a cellular network, and/or combinations thereof. In some embodiments, the various systems, components, and/or devices included in the system 400 may communicate with one another via the network 430.

In some embodiments, the database 435 may include at least one of a computing device, a remote server, a server bank, a remote device, and/or among other possible computer hardware and/or computer software. For example, the database 435 may include a server bank and the server bank can store, keep, maintain, and/or otherwise hold the various types of information described herein. In some embodiments, the database 435 may house and/or otherwise implement at least one of the various systems, devices, and/or components described herein. In some embodiments, the database 435 may include, store, maintain, and/or otherwise host the control system 96. For example, the control system 96 may be distributed across one or more servers (e.g., the database 435). In some implementations, the control system 96 and/or various other components of the system 400 may be implemented using cloud computing services/platforms.

In some embodiments, the control system 96 may include at least one controller 403, at least one sensor 420, and/or at least one interface 425. The various components of the control system 96 (e.g., the controller 403, the sensors 420, and the interface 425) may be communicably coupled with one another. In some embodiments, the control system 96 may control, operate, and/or maneuver the vehicle 10. For example, the control system 96 may control the prime mover to drive the tractive elements 78 and 88. As another example, the control system 96 the steering wheel of the vehicle 10. Stated otherwise, the control system 96 may implement automatic guidance of the vehicle 10 by controlling various operations and/or components of the vehicle 10.

In some embodiments, the sensors 420 may include at least one of a position sensor, an accelerometer, a tachometer, a speedometer, a GPS device/sensor, a temperature sensor, a voltmeter, an ammeter, a radar sensor, a pressure sensor, a tactile sensor, a photodetector, a motion sensor, a proximity sensor, a telemetry device, and/or among other possible sensors and/or devices. For example, the sensors 420 can include a position sensor that can collect data to determine a position and/or an orientation of the vehicle 10. In other embodiments, the sensors 420 may include cameras, video devices, audio devices, haptic devices, optical devices, and/or other possible optical instruments can capture, record, produce and/or otherwise provide videos and/or images. The cameras can also include audio devices. For example, the cameras can include at least one of a speaker, a microphone, a headphone, and/or among other possible audio and/or sound devices.

In some embodiments, the sensors 420 may be placed, located, situated, positioned, coupled and/or otherwise disposed on various components and/or locations on the vehicle 10. For example, a first sensor 420 may be disposed on the front differential 74 and a second sensor 420 may be disposed on the rear differential. To continue this example, the first sensor 420 may collect information (e.g., telemetry data, vehicle information, vehicle status information) to determine an orientation and/or a placement of the tractive elements 78. As another example, the sensors 420 may collect information to determine a speed and/or acceleration of the vehicle 10. In some embodiments, the sensors 420 may collect the various types of data and/or information described herein. For example, the sensors 420 may collect telemetry data, diagnostics data, vehicle operation data, and/or data inputs. In some embodiments, the telemetry data may include data relating to the operation of the vehicle 10 such as, system statuses, a status of various vehicle subsystems and components (e.g., engine, transmission, tire pressure, brakes, pump(s), etc.), vehicle status (e.g., if a door is open, if equipment is deployed, etc.), and/or implement actions.

In some embodiments, the interface 425 may include at least one of network communication devices, network interfaces, and/or other possible communication interfaces. The interface 425 may include wired or wireless communications interfaces (e.g., jacks, antennas, transmitters, receivers, transceivers, wire terminals, etc.) for conducting data communications with various systems, devices, and/or components described herein. The interface 425 may be direct (e.g., local wired or wireless communications) and/or via a communications network (e.g., the network 430). For example, the interface 425 may include an Ethernet card and port for sending and receiving data via an Ethernet-based communications link or network. The interface 425 may also include a Wi-Fi transceiver for communicating via a wireless communications network (e.g., the network 430). The interface 425 may include a power line communications interface. The interface 425 may include an Ethernet interface, a USB interface, a serial communications interface, and/or a parallel communications interface.

In some embodiments, the controller 403 may include at least one processing circuit 405. For example, the controller 403 may include a first processing circuit 405 and a second processing circuit 405. The processing circuits 405 may include at least one processor 410 and memory 415. In some embodiments, the processing circuits 405 and/or one or more components thereof (e.g., the processors 410 and memory 415) may perform similar functionality to that of the control system 96 and/or one or more components thereof. For example, memory 415 may store programming logic that, when executed by the processors 410, cause the processors 410 to perform automatic guidance of the vehicle 10. In some embodiments, the processing circuits 405 may be communicably connected to one or more components of the control system 96. For example, the processing circuits 405 may be communicably connected to the interface 425. In some embodiments, the processors 410 may be implemented as a general-purpose processor, an application specific integrated circuit (ASIC), one or more field programmable gate arrays (FPGAs), a group of processing components, or other suitable electronic processing components.

In some embodiments, memory 415 (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present application. Memory 415 may be or include volatile memory or non-volatile memory. Memory 415 may include database components, object code components, script components, or any other type of information structure for supporting the various activities and information structures described in the present application. According to an exemplary embodiment, memory 415 is communicably connected to the processors 410 via the processing circuits 405 and memory 415 includes computer code for executing (e.g., by the processing circuits 405 and/or the processors 410) one or more processes described herein.

In some embodiments, the vehicle 10 may include the controller 403. For example, the controller 403 may be disposed on the vehicle 10. In some embodiments, the controller 403 may include a first controller 403 and a second controller 403. In other embodiments, memory 415 may store one or more first instructions that cause the processors 410 to perform operations similar to the first controller 403 and one or more second instructions that cause the processors 410 to perform operations similar to the second controller 403.

In some embodiments, the first controller 403 and the second controller 403 implement a cascade control loop. For example, the first controller 403 may store, in memory 415, first instructions that cause the first controller 403 (e.g., the processors 410) to implement a first portion of the cascade control loop. To continue this example, the first controller 403 may implement the first portion by providing one or more signals as inputs to the second controller. In this example, the second controller 403 may store, in memory 415, second instructions that cause the second controller 403 (e.g., the processors 410) to implement a second portion of the cascade control loop. To continue this example, the second controller 403 may implement the second portion by providing one or more signals as inputs to the first controller 403.

In some embodiments, the first controller 403 and the second controller 403 may implement the cascade control loop at one or more rates. For example, the first controller 403 may operate at a first clock cycle and the second controller 403 may operate at a second clock cycle. As another example, the first controller 403 may be active while the second controller 403 is idle, and the second controller 403 may be active while the first controller 403 is idle. In some embodiments, the first controller 403 may implement an outer loop of the cascade control loop at one or more rates that are different from which the second controller 403 implements an inner loop of the cascade control loop.

In some embodiments, the first controller 403 can implement the outer loop the cascade control loop without calibration relative to the vehicle 10. For example, the first controller 403 may be integrated (e.g., added to, included with, etc.) with the vehicle 10 and once integrated the first controller 403 may implement the outer loop of the cascade loop. Stated otherwise, the first controller 403 is not tunned and/or tested according to the vehicle 10. In some embodiments, the second controller 403 can implement the inner loop of the cascade control loop without calibration relative to the vehicle 10. Stated otherwise, the second controller 403 is not tunned and/or tested according to the vehicle 10.

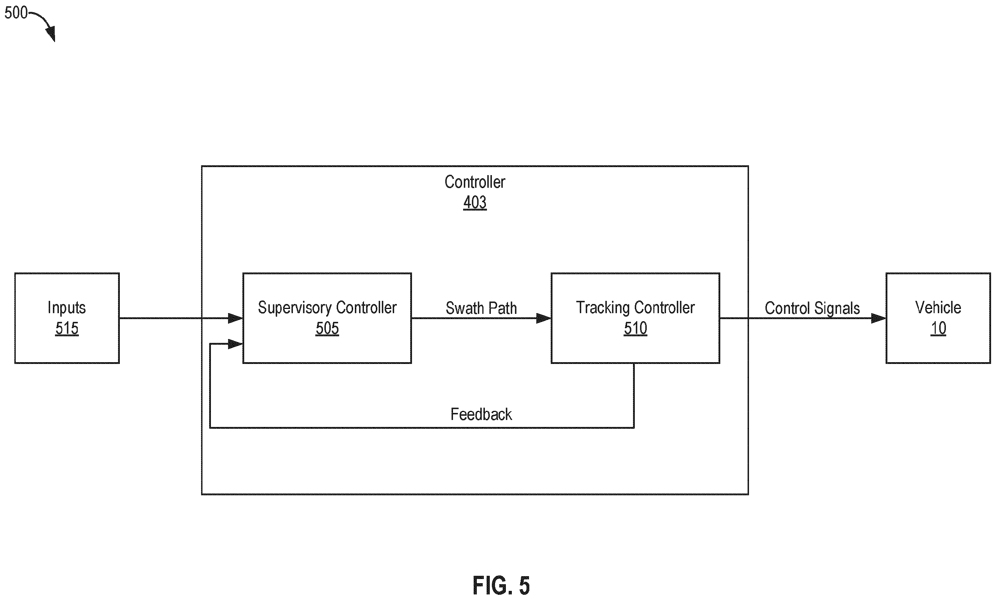

FIG. 5 depicts a block diagram of a cascade control loop 500, according to some embodiments. In some embodiments, the controller 403 may implement one or more portions, aspects, and/or segments of the cascade control loop 500. For example, the controller 403 may implement an outer loop of the cascade control loop 500 and an inner loop of the cascade control loop 500. In some embodiments, the controller 403 may include at least one supervisory controller 505 and at least one tracking controller 510. For example, the supervisory controller 505 may include the first controller 403. As another example, the tracking controller 510 may include the second controller 403. While the supervisory controller 505 and the tracking controller 510, as shown in FIG. 5, are shown as separate components, in some embodiments, the controller 403 may implement the supervisory controller 505 and the tracking controller 510 as a single component.

In some embodiments, the supervisory controller 505 and the tracking controller 510 may include similar components, circuitry, hardware, software, and/or firmware to various devices described herein. For example, the supervisory controller 505 may include the processing circuits 405. In some embodiments, the supervisory controller 505 may be in communication with one or more systems, devices, and/or components of the vehicle 10. For example, the supervisory controller 505 may be in communication with the sensors 420.

In some embodiments, the supervisory controller 505 may receive one or more inputs 515. For example, the supervisory controller 505 may receive the inputs 515 as inputs to the cascade control loop 500. As another example, the supervisory controller 505 may receive the inputs 515 as constraints for a non-linear predictive model. In some embodiments, the supervisory controller 505 may receive one or more sets of information. For example, the supervisory controller 505 may receive information from the sensors 420. In some embodiments, the supervisory controller 505 may receive information that indicates a position of the vehicle 10. For example, the supervisory controller 505 may receive GPS coordinates and/or spatial information that corresponds to a position of the vehicle 10. In some embodiments, the information may indicate a position of the vehicle 10 relative to one or more swaths. For example, the information may indicate that the vehicle 10 is 100 yards away from a swath. As another example, the information may indicate that the vehicle 10 is offset from the swath by a given number of degrees.

In some embodiments, the supervisory controller 505 may retrieve one or more sets of information. For example, the supervisory controller 505 may retrieve information from memory 415. As another example, the supervisory controller 505 may retrieve information from the database 435. In some embodiments, the supervisory controller 505 may retrieve information that indicates one or more parameters of the vehicle 10. For example, the supervisory controller 505 may retrieve information that includes a steering rate (e.g., a parameter) of the vehicle 10. As another example, the supervisory controller 505 may retrieve information that indicates a turning radius (e.g., a parameter) of the vehicle 10.

In some embodiments, the supervisory controller 505 may extract and/or detect the parameters of the vehicle 10. For example, memory 415 may store a user manual and/or spec sheet associated with the vehicle 10. To continue this example, the supervisory controller 505 may retrieve the spec sheet and subsequently extract the parameters of the vehicle 10 from the spec sheet. In some embodiments, the parameters of the vehicle 10 may include at least one of a steering rate of the vehicle 10, a speed of the vehicle 10, an acceleration of the vehicle 10, a size of the vehicle 10, and/or a position of an implement coupled with the vehicle 10.

In some embodiments, the supervisory controller 505 may generate one or more acquisition paths. For example, the supervisory controller 505 may generate a path for the vehicle 10 to travel to reach a swath. As another example, the supervisory controller 505 may generate one or more vehicle operations and/or vehicle controls that may result in the vehicle 10 reaching the swath. In some embodiments, the supervisory controller 505 may implement and/or perform non-linear modeling to generate the acquisition paths. For example, the supervisory controller 505 may use the inputs 515 (e.g., vehicle information, distance to swath, vehicle hardware, etc.) as parameters to a non-linear model. To continue this example, the output of the non-linear model may include the acquisition paths. In some embodiments, the supervisory controller 505 may implement that nonlinear model as at least one of exponential functions, regression analysis, power functions, gaussian functions, logarithmic functions, regression tree analysis, and/or various other regression models.

In some embodiments, the supervisory controller 505 may communicate with one or more devices described herein. For example, the supervisory controller 505 may communicate with the tracking controller 510. In some embodiments, the supervisory controller 505 may communicate the acquisition paths (shown as Swath Path in FIG. 5) to the tracking controller 510. For example, the supervisory controller 505 may provide the Swath Path as an input to the tracking controller 510. In some embodiments, the supervisory controller 505 may generate one or more control signals based on the Swath Path. For example, the supervisory controller 505 may generate control signals that cause the vehicle 10 to navigate and/or travel, according to the Swath Path, to the swath.

In some embodiments, the tracking controller 510 may monitor movement and/or operation of the vehicle 10. For example, the tracking controller 510 may receive information, from the sensors 420, that indicates movement of the vehicle 10. To continue this example, the tracking controller 510 may monitor movement of the vehicle 10 as the vehicle 10 travels to the swath. In some embodiments, the tracking controller 510 may detect one or more deviations in the movement of the vehicle 10. For example, the tracking controller 510 may determine that the vehicle 10 is not moving in accordance with the Swath Path. As another example, the Swath Path may include a given bearing and/or direction for the vehicle 10 to travel, including forward and reverse directions. To continue this example, the tracking controller 510 may detect a deviation in the movement of the vehicle 10 based on the vehicle 10 traveling in a direction that does not account for the Swath Path.

In some embodiments, the tracking controller 510 may generate one or more modifications and/or adjustment to the Swath Path. For example, the tracking controller 510 may modify the Swath Path to account for the deviation in the movement of the vehicle 10. Stated otherwise, the tracking controller 510 may adjust the movement of the vehicle 10 such that the vehicle 10 can get back on track (e.g., move according to the Swath Path). As another example, the tracking controller 510 may generate one or more signals (shown as Control Signals in FIG. 5) to control subsequent movement of the vehicle 10. In this example, the tracking controller 510 may generate the Control Signals to cause the movement of the vehicle 10 to be adjusted and/or modified.

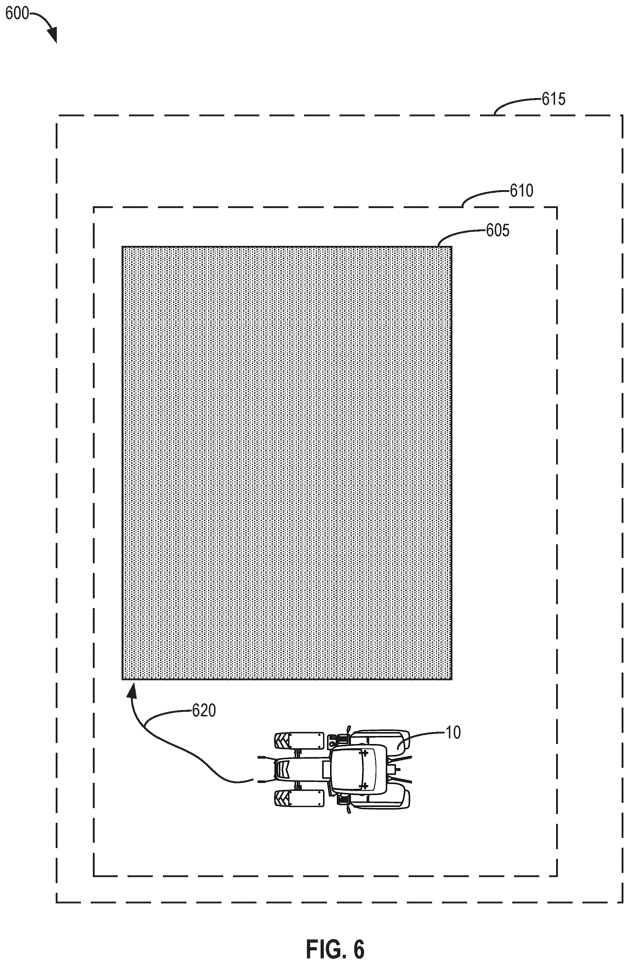

FIG. 6 depicts an aerial view of an environment 600, according to some embodiments. In some embodiments, the environment 600 may refer to and/or include land, crops, a farm, and/or harvest fields. As shown in FIG. 6, the environment 600 can include the vehicle 10 and a swath 605. In some embodiments, the swath 605 may refer to and/or include the various swaths described herein. In some embodiments, the swath 605 may refer to and/or include crops, fields, harvests, and/or other residue arranged in rows. In some embodiments, the vehicle 10 may be positioned and/or located relative to the swath 605. For example, as shown in FIG. 6, the vehicle 10 is offset by roughly 90 degrees from the swath 605. As another example, as shown in FIG. 6, there is a distance between the vehicle 10 and the swath 605 (e.g., the vehicle 10 is not located at the swath 605).

In some embodiments, the supervisory controller 505 may generate one or more zones, areas, regions, and/or horizons that include the vehicle 10 and the swath 605. For example, as shown in FIG. 6, there is an area 610 and an area 615. In some embodiments, the areas (e.g., the area 610 and the area 615) may adjust and/or change as the vehicle 10 moves. For example, the areas may shrink, expand, move, and/or otherwise change as the vehicle 10 moves.

In some embodiments, the supervisory controller 505 may generate at least one path 620 (e.g., the Swath Path, an acquisition path, a path to the swath 605, etc.) for the vehicle 10 to travel to reach the swath 605. For example, the supervisory controller 505 may generate a first path 620 and a second path 620. In some embodiments, the supervisory controller 505 may determine one or more areas that included the swath 605 and the vehicle 10. For example, the supervisory controller 505 may determine the area 610 and the area 615. In some embodiments, a size, configuration, placement, and/or arrangement of the areas may be different. For example, as shown in FIG. 6, the area 615 is larger than the area 610. As another example, as shown in FIG. 6, the area 615 includes the area 610.

In some embodiments, the supervisory controller 505 may generate the paths 620 responsive to determining one or more areas. For example, the supervisory controller 505 may generate a first path 620 responsive to determining the area 615. To continue this example, the supervisory controller 505 may generate the first path 620 based on a dimension and/or size of the area 615. In this example, the supervisory controller 505 may generate the first path 620 based on one or more movements, actions, and/or operations that the vehicle 10 may take within the area 615 to travel to the swath 605. Stated otherwise, based on the size and/or dimensions of the area 615, the supervisory controller 505 may generate the first path 620.

In some embodiments, the supervisory controller 505 may receive information responsive to movement of the vehicle 10. For example, the supervisory controller 505 may receive, from the sensors 420, information that indicates a change in position of the vehicle 10 (e.g., the vehicle 10 is traveling and/or moving). As another example, the supervisory controller 505 may receive information from the tracking controller 510 that indicates deviations from the first path 620.

In some embodiments, the supervisory controller 505 may determine one or more areas based on the movement of the vehicle 10. For example, the supervisory controller 505 may determine the area 610 based on movement of the vehicle 10 towards the swath 605. To continue this example, the supervisory controller 505 may determine the area 610 to reduce and/or minimize movement patterns and/or operations for which the vehicle 10 may perform to travel to the swath 605. In some embodiments, the supervisory controller 505 may generate a second path 620 responsive to determining the area 610. For example, the supervisory controller 505 may determine one or more movements for the vehicle 10 to perform based on the size of the area 610. As another example, the supervisory controller 505 may restrict certain movements and/or operations of the vehicle 10 to maintain the vehicle 10 within the area 610.

In some embodiments, the supervisory controller 505 may generate one or more paths to guide or maneuver the vehicle 10 in reverse. For example, the supervisory controller 505 may generate a path to align the vehicle 10 with the swath 605 while the vehicle 10 moves in reverse or backwards to reach the swath 605. As another example, the supervisory controller 505 may generate a path to align an implement of the vehicle with the swath 605 such that the vehicle 10 may travel or move in reverse to have the implement travel towards the swath 605.

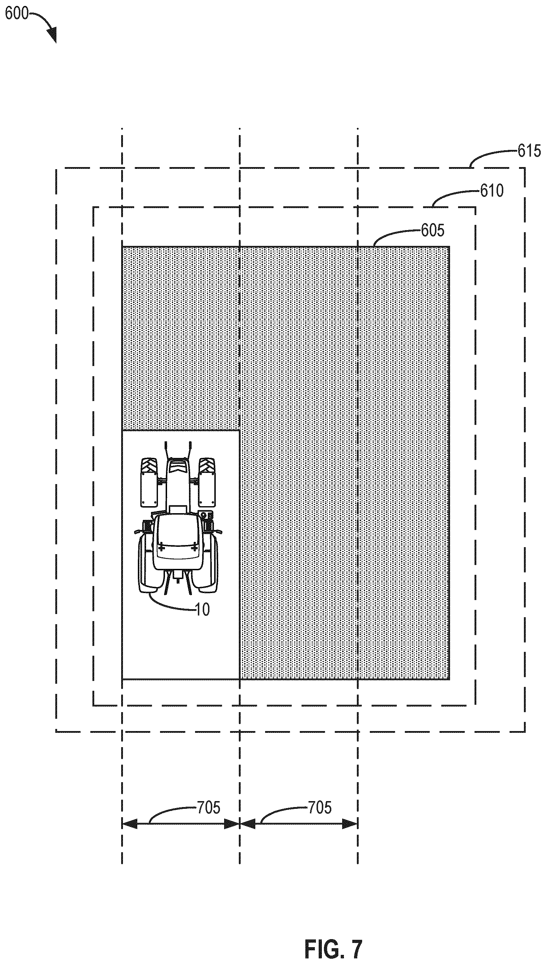

FIG. 7 depicts an aerial view of the environment 600, according to some embodiments. As shown in FIG. 7, the vehicle 10 has acquired (e.g., reached, arrived, etc.) the swath 605. For example, the vehicle 10 may have moved and/or travelled according to the path 620 to reach the swath 605. In some embodiments, the swath 605 may include one or more rows. For example, as shown in FIG. 7, reference number 705 may represent one or more rows of the swath 605. In some embodiments, the vehicle 10 may travel, move, and/or navigate across and/or along a row of the swath 605. The vehicle 10 may travel along the row to collect and/or harvest crops. In some embodiments, the supervisory controller 505 may generate, responsive to the vehicle 10 reaching the swath 605, one or more subsequent paths for which the vehicle 10 may travel to harvest the swath 605.

In some embodiments, the supervisory controller 505 may generate one or more predictions. For example, the supervisory controller 505 may generate a prediction of the area 610 (e.g., a prediction as to the size, the location, the placement, etc.). To continue this example, the supervisory controller 505 may determine one or more paths based on the prediction of the area 610. Stated otherwise, the supervisory controller 505 may use the area 610 as a constraint to generate one or more paths for the vehicle 10. In some embodiments, the supervisory controller 505 may generate one or more predictions prior to and/or after movement of the vehicle 10. For example, the supervisory controller 505 may generate a prediction of the area 615 prior to movement of the vehicle 10. To continue this example, the supervisory controller 505 may generate a prediction of the area 610 responsive to movement of the vehicle 10.

In some embodiments, the supervisory controller 505 may generate the predictions of the areas based on one or more thresholds. For example, the supervisory controller 505 may generate the predictions based on a distance between the vehicle 10 and the swath 605. As another example, the supervisory controller 505 may generate the predictions based on a size of the swath 605. In some embodiments, the thresholds may be less restrictive (e.g., more variance, less strict, larger ranges, etc.) when the vehicle 10 is far away from the swath 605. For example, the supervisory controller 505 may be able to generate a prediction of the area 615 using thresholds that reflect the distance from the swath. To continue this example, as the vehicle 10 approaches (e.g., moves, travels, etc.) the swath 605, the thresholds may decrease thereby restricting and/or constraining the size of the area used by the supervisory controller 505 to generate paths to the swath 605.

As a non-limiting example, at a first point in time, the vehicle 10 may be 300 feet away from the swath 605. In this example, the supervisory controller 505 may use one or more first thresholds and/or threshold values based on the vehicle 10 being 300 feet from the swath 605. To continue this example, the one or more first thresholds may define and/or dictate a first size (e.g., square footage, dimension, acres, etc.) of the area 615. In this example, the one or more first thresholds may dictate that the first size of the area 615 is 15 percent larger than a size of the swath 605. To continue this example, the supervisory controller 505 may generate a prediction of the area 615 based on the one or more first thresholds. In this example, the supervisory controller 505 may generate a prediction of where the swath 605 is located within the area 615. To continue this example, the supervisory controller 505 may generate, responsive to the prediction of the area 615, a path for the vehicle 10 to travel to reach the swath 605. In this non-limiting example, as the vehicle 10 begins to travel to the swath 605, the thresholds and/or the threshold values may change from the one or more first thresholds to one or more second thresholds. To continue this example, the size of a predicted area, relative to the swath 605, may decrease by a given amount and/or percentage as the distance between the vehicle 10 and the swath 605 decreases. In this non-limiting example, the thresholds and/or threshold values may be decrease by 1 percent responsive to the vehicle 10 moving 15 feet closer to the swath 605.

As utilized herein with respect to numerical ranges, the terms "approximately," "about," "substantially," and similar terms generally mean +/- 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the figures. It should be noted that the orientation of various elements may differ according to other exemplary embodiments, and that such variations are intended to be encompassed by the present disclosure.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

The term "client or "server" include all kinds of apparatus, devices, and machines for processing data, including by way of example a programmable processor, a computer, a system on a chip, or multiple ones, or combinations, of the foregoing. The apparatus may include special purpose logic circuitry, e.g., a field programmable gate array (FPGA) or an application specific integrated circuit (ASIC). The apparatus may also include, in addition to hardware, code that creates an execution environment for the computer program in question (e.g., code that constitutes processor firmware, a protocol stack, a database management system, an operating system, a cross-platform runtime environment, a virtual machine, or a combination of one or more of them). The apparatus and execution environment may realize various different computing model infrastructures, such as web services, distributed computing and grid computing infrastructures.

The systems and methods of the present disclosure may be completed by any computer program. A computer program (also known as a program, software, software application, script, or code) may be written in any form of programming language, including compiled or interpreted languages, declarative or procedural languages, and it may be deployed in any form, including as a stand-alone program or as a module, component, subroutine, object, or other unit suitable for use in a computing environment. A computer program may, but need not, correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform actions by operating on input data and generating output. The processes and logic flows may also be performed by, and apparatus may also be implemented as, special purpose logic circuitry (e.g., an FPGA or an ASIC).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data (e.g., magnetic, magneto-optical disks, or optical disks). However, a computer need not have such devices. Moreover, a computer may be embedded in another device (e.g., a vehicle, a Global Positioning System (GPS) receiver, etc.). Devices suitable for storing computer program instructions and data include all forms of non-volatile memory, media and memory devices, including by way of example semiconductor memory devices (e.g., EPROM, EEPROM, and flash memory devices; magnetic disks, e.g., internal hard disks or removable disks; magneto-optical disks; and CD ROM and DVD-ROM disks). The processor and the memory may be supplemented by, or incorporated in, special purpose logic circuitry.

To provide for interaction with a user, implementations of the subject matter described in this specification may be implemented on a computer having a display device (e.g., a CRT (cathode ray tube), LCD (liquid crystal display), OLED (organic light emitting diode), TFT (thin-film transistor), or other flexible configuration, or any other monitor for displaying information to the user. Other kinds of devices may be used to provide for interaction with a user as well; for example, feedback provided to the user may be any form of sensory feedback (e.g., visual feedback, auditory feedback, or tactile feedback).

Implementations of the subject matter described in this disclosure may be implemented in a computing system that includes a back-end component (e.g., as a data server), or that includes a middleware component (e.g., an application server), or that includes a front end component (e.g., a client computer) having a graphical user interface or a web browser through which a user may interact with an implementation of the subject matter described in this disclosure, or any combination of one or more such back end, middleware, or front end components. The components of the system may be interconnected by any form or medium of digital data communication (e.g., a communication network). Examples of communication networks include a LAN and a WAN, an inter-network (e.g., the Internet), and peer-to-peer networks (e.g., ad hoc peer-to-peer networks).

It is important to note that the construction and arrangement of the vehicle 10 and the systems and components thereof (e.g., the driveline 50, the braking system 92, the control system 96, etc.) as shown in the various exemplary embodiments is illustrative only. Additionally, any element disclosed in one embodiment may be incorporated or utilized with any other embodiment disclosed herein.

## Claims

1. An agricultural vehicle, comprising:
one or more sensors disposed on the agricultural vehicle;
a first controller in communication with the one or more sensors, the first controller comprising one or more memory devices storing first instructions thereon that, when executed by one or more first processors, cause the one or more first processors to:
receive, from the one or more sensors, first information that indicates a position of the agricultural vehicle relative to a swath;
retrieve, from a database, second information that indicates one or more parameters of the agricultural vehicle;
generate, based at least one the first information and the information, a path for the agricultural vehicle to travel to reach the swath; and
transmit, to a second controller of the agricultural vehicle, responsive to generation of the path, one or more signals to indicate the path for the agricultural vehicle; and
the second controller comprising one or more second memory devices storing second instructions thereon that, when executed by one or more second processors, cause the one or more second processors to:
monitor, responsive to receipt of the one or more signals, movement of the agricultural vehicle as the agricultural vehicle travels to the swath;
detect, responsive to monitoring the movement of the agricultural vehicle, a deviation from the path; and
generate, responsive to detection of the deviation, one or more second signals to control subsequent movement of the agricultural vehicle.

2. The agricultural vehicle of claim 1, wherein the first controller and the second controller implement a cascade control loop, wherein the first instructions cause the one or more first processors to implement a first portion of the cascade control loop by providing the one or more signals as inputs to the second controller, and wherein the second instructions cause the one or more second processors to implement a second portion of the cascade control loop by providing one or more third signals as inputs to the first controller.

3. The agricultural vehicle of claim 1, wherein the one or more parameters of the agricultural vehicle comprise at least one of:
a steering rate of the agricultural vehicle;
a speed of the agricultural vehicle;
an acceleration of the agricultural vehicle;
a size of the agricultural vehicle; or
a position of an implement coupled with the agricultural vehicle.

4. The agricultural vehicle of claim 1, wherein the path includes a first path for the agricultural vehicle to travel to reach the swath and a second path for the agricultural vehicle to travel to reach the swath, and wherein the first instructions cause the one or more first processors to:
determine, based at least on the first information, a first area that includes the swath and the agricultural vehicle;
generate, responsive to determination of the first area, the first path for the agricultural vehicle to travel to reach the swath;
receive, from the one or more sensors, responsive to the movement of the agricultural vehicle, third information that indicates a second position of the agricultural vehicle relative to the swath;
determine, based at least one the third information, a second area that is less than the first area, wherein the second area includes:
at least a portion of the first path;
the swath; and
the agricultural vehicle; and
generate, responsive to determination of the second area, the second path for the agricultural vehicle to travel to reach the swath.

5. The agricultural vehicle of claim 1, wherein the first instructions cause the one or more first processors to receive, from the one or more second processors, an input to a cascade control loop.

6. The agricultural vehicle of claim 1, wherein the first instructions cause the one or first processors to:
generate, prior to the movement of the agricultural vehicle, a first prediction of a first area that includes the swath and the agricultural vehicle; and
generate, subsequent to the movement of the agricultural vehicle, a second prediction of a second area that includes the swath and the agricultural vehicle;
the second area less than the first area.

7. The agricultural vehicle of claim 6, wherein the one or more first processors generate the first prediction based on one or more first predetermined thresholds, and wherein the one or more first processors generate the second prediction based on one or more second predetermined thresholds different from the one or more first predetermined thresholds.

8. The agricultural vehicle of claim 1, comprising:
the first controller configured to implement an outer loop of a cascade control loop at one or more first rates; and
the second controller configured to implement an inner loop of the cascade control loop at one or more second rates different from the one or more first rates.

9. The agricultural vehicle of claim 8, comprising:
the first controller configured to implement the outer loop of the cascade control loop without calibration relative to the agricultural vehicle; and
the second controller configured to implement the inner loop of the cascade control loop without calibration relative to the agricultural vehicle.

10. A control system for an agricultural vehicle, the control system comprising:
a first controller in communication with one or more sensors, the first controller comprising one or more memory devices storing first instructions thereon that, when executed by one or more first processors, cause the one or more first processors to:
receive, from the one or more sensors, first information that indicates a position of the agricultural vehicle relative to a swath;
retrieve, from a database, second information that indicates one or more parameters of the agricultural vehicle;
generate, based at least one the first information and the information, a path for the agricultural vehicle to travel to reach the swath;
transmit, to a second controller of the agricultural vehicle, responsive to generation of the path, one or more signals to indicate the path for the agricultural vehicle; and
receive, responsive to transmission of the one or more signals, from the second controller, an input to a cascade control loop.

11. The control system of claim 10, wherein the first controller and the second controller implement the cascade control loop, wherein the first controller implements a first portion of the cascade control loop by providing the one or more signals as inputs to the second controller, and wherein the second controller implements a second portion of the cascade control loop by providing one or more third signals as the input to the cascade control loop.

12. The control system of claim 10, wherein the one or more parameters of the agricultural vehicle comprise at least one of:
a steering rate of the agricultural vehicle;
a speed of the agricultural vehicle;
an acceleration of the agricultural vehicle;
a size of the agricultural vehicle; or
a position of an implement coupled with the agricultural vehicle.

13. The control system of claim 10, wherein the path includes a first path for the agricultural vehicle to travel to reach the swath and a second path for the agricultural vehicle to travel to reach the swath, and wherein the first instructions cause the one or more first processors to:
determine, based at least on the first information, a first area that includes the swath and the agricultural vehicle;
generate, responsive to determination of the first area, the first path for the agricultural vehicle to travel to reach the swath;
receive, from the one or more sensors, responsive to movement of the agricultural vehicle, third information that indicates a second position of the agricultural vehicle relative to the swath;
determine, based at least one the third information, a second area that is less than the first area, wherein the second area includes:
at least a portion of the first path;
the swath; and
the agricultural vehicle; and
generate, responsive to determination of the second area, the second path for the agricultural vehicle to travel to reach the swath.

14. The control system of claim 10, wherein the first instructions cause the one or first processors to:
generate, prior to movement of the agricultural vehicle, a first prediction of a first area that includes the swath and the agricultural vehicle; and
generate, subsequent to the movement of the agricultural vehicle, a second prediction of a second area that includes the swath and the agricultural vehicle;
the second area less than the first area.

15. The control system of claim 14, wherein the one or more first processors generate the first prediction based on one or more first predetermined thresholds, and wherein the one or more first processors generate the second prediction based on one or more second predetermined thresholds different from the one or more first predetermined thresholds.

16. The control system of claim 10, comprising:
the first controller configured to implement an outer loop of the cascade control loop at one or more first rates; and
the second controller configured to implement an inner loop of the cascade control loop at one or more second rates different from the one or more first rates.

17. The control system of claim 16, comprising:
the first controller configured to implement the outer loop of the cascade control loop without calibration relative to the agricultural vehicle; and
the second controller configured to implement the inner loop of the cascade control loop without calibration relative to the agricultural vehicle.

18. An agricultural vehicle, comprising:
a first controller in communication with one or more sensors, the first controller comprising one or more memory devices storing first instructions thereon that, when executed by one or more first processors, cause the one or more first processors to:
receive, from the one or more sensors, first information that indicates a position of the agricultural vehicle relative to a swath;
retrieve, from a database, second information that indicates one or more parameters of the agricultural vehicle;
generate, based at least one the first information and the information, a path for the agricultural vehicle to travel to reach the swath; and
transmit, to a second controller of the agricultural vehicle, responsive to generation of the path, one or more signals to indicate the path for the agricultural vehicle; and
the second controller comprising one or more second memory devices storing second instructions thereon that, when executed by one or more second processors, cause the one or more second processors to:
monitor, responsive to receipt of the one or more signals, movement of the agricultural vehicle as the agricultural vehicle travels to the swath;
wherein the first controller implements an outer loop of a cascade control loop by providing the one or more signals as inputs to the second controller;
wherein the second controller implements an inner loop of the cascade control loop by providing one or more second signals as inputs to the first controller.

19. The agricultural vehicle of claim 18, comprising:
the first controller configured to implement the outer loop of the cascade control loop at one or more first rates; and
the second controller configured to implement the inner loop of the cascade control loop at one or more second rates different from the one or more first rates.

20. The agricultural vehicle of claim 18, comprising:
the first controller configured to implement the outer loop of the cascade control loop without calibration relative to the agricultural vehicle; and
the second controller configured to implement the inner loop of the cascade control loop without calibration relative to the agricultural vehicle.
